# EUROPEAN PATENT SPECIFICATION

(11) **EP 4 187 112 B1**
(45) Date of publication and mention of the grant of the patent: **22.05.2024**
(21) Application number: 21211330.2
(22) Date of filing: 30.11.2021
(51) Int. Cl.: F16B 7/04, F16B 2/04, F16B 2/18

(54) **CONNECTING DEVICE FOR A VARIABLE-POSITION TRANSVERSE CONNECTION OF TWO COMPONENTS**
VERBINDUNGSVORRICHTUNG FÜR EINE POSITIONSVERSTELLBARE QUERVERBINDUNG ZWEIER BAUTEILE
DISPOSITIF DE CONNEXION POUR UNE CONNEXION TRANSVERSALE À POSITION VARIABLE DE DEUX COMPOSANTS

(43) Date of publication of application: 31.05.2023
(73) Proprietor: Airbus Operations GmbH, 21129 Hamburg (DE)
(72) Inventor: WEIGAND, Maximilian, 21129 Hamburg (DE); BENTHIEN, Hermann, 21129 Hamburg (DE)
(74) Representative: LKGLOBAL Lorenz & Kopf Patentanwalt Attorney at Law PartG mbB

(56) References cited:
- DE-A1-102019 101 401
- GB-A- 2 064 055
- JP-U- S4 892 254
- US-A1- 2019 193 871
- US-B2- 11 137 011

## Description

### Technical field

The invention relates to a connecting device for a variable-position transverse connection of two components, as well as an aircraft having an interior space and two components coupled to each other through at least one such connecting device.

### Background of the invention

In commercial aircraft, usually a passenger cabin with a large number of pieces of equipment is provided inside a fuselage, which is constructed with the aid of a fuselage structure. Inside the cabin, often a large number of holders is provided, which are adapted to the pieces of equipment to be accommodated. In the case of aircraft and in particular larger commercial aircraft with fuselage lengths of well over 10 m, certain manufacturing tolerances need to be taken into account when arranging the holders.

For example, tolerances for providing a smooth, harmonic, and uninterrupted visible contour inside an aircraft cabin may be compensated through dedicated, tolerance-compensating holders or connecting devices. DE 10 2019 101 401 A1 proposes a fastening system for fastening components to a fuselage structure in an interior of an aircraft. EP 3 561 322 B1 discloses a fastening system for fastening components in a surface element.

However, also components exist that are subjected to thermal expansion during the use of the aircraft, such as an electric bus bar, which is supported on the aircraft structure. Common holders, which rigidly hold the respective component, would be subjected to mechanical stresses due to the thermal expansion.

### Summary of the invention

It is thus an object of the invention to propose an alternative connecting device for connecting components inside an interior space of a means of transport, which is capable of compensating manufacturing-induced position tolerances and which tolerates slight compensation movements during use of the means of transport.

This object is met by a connecting device for a variable-position transverse connection of two components having the features of claim 1. Advantageous embodiments and further improvements may be gathered from the subclaims and the following description.

A connecting device for a variable-position transverse connection of two components is proposed, comprising a tubular section, a locking insert, and a locking rod, wherein the tubular section has a radial cutout and a plurality of first grooves on an inner tubular surface, wherein the locking insert comprises two opposed lateral sides and a connection side arranged between the lateral sides, wherein the locking insert is expandable from a neutral state into a locking state, wherein in the neutral state a distance between the two lateral sides is smaller than in the locking state, wherein the locking insert comprises locking teeth on at least one of the lateral sides directly facing the inner tubular surface when inserted into the tubular section, wherein the locking insert is designed to be axially movable along the tubular section in the neutral state and to engage the first grooves in the locking state, wherein the locking insert comprises a recess on the connection side that is alignable with the radial cutout when inserted into the tubular section, and wherein the locking rod comprises a locking head insertable into the recess through the radial cutout to selectively expand the locking insert and to selectively provide a form-fit connection with the locking head.

The connecting device according to the invention allows to connect two components in an easily adjustable position, such that manufacturing-induced tolerances can be compensated. The two components to be connected may belong to a framework structure. They may also be directed to a mounting base, which is equipped with holders for holding a piece of equipment on the mounting base. For example, the piece of equipment may be a bus bar of an electric system in an aircraft, which may expand during the use of the aircraft and thus requires a certain degree of flexibility, yet a sufficiently rigid mounting.

The tubular section is to be understood as a part having a tubular design. For example, the cross-sectional surface of the tubular section may be based on a circle. It may have a constant diameter that extends along a straight axis. On the inner side of the tubular section, first grooves are arranged. This may refer to a plurality of first grooves, that are arranged parallel to each other. They may extend in a circumferential direction on the inner surface of the tubular section. It may also be conceivable that the first grooves create a thread.

The radial cut-out is placed in an outer shell of the tubular section and extends in a radial direction from outside the tubular section through the shell surface into the interior of the tubular section. Thus, the radial cut-out is an opening that connects an outer side of the tubular section to the interior.

The locking insert is a component that is insertable into the interior of the tubular section. It may be placed into the tubular section from a position clearly outside its intended locking position. It may be moved along the respective component to reach the tubular section. For providing an easy movability of the locking insert, it may comprise guiding edges that contact respective guiding edges in the tubular section. The locking insert may comprise a length in an axial direction that clearly exceeds the width and height of a cross-sectional surface of the interior of the tubular section. Thus, a canting or clamping of the locking insert may be prevented.

The locking insert is intended to be brought into a locking state, in which it is locked in the tubular section, or into a neutral state, in which it is freely movable along the tubular section. For locking, it comprises looking teeth on at least one of the lateral sides. It is to be understood, that the locking teeth are dimensioned corresponding to the first grooves, such that they may completely engage with the first grooves. Bringing the locking insert into a locking state is conducted by expanding it, which means that the distance between the two lateral sides is increased, such that the width of the cross-sectional surface of the locking insert increases. Then, the locking teeth enter the first grooves and they engage with the locking teeth.

Expanding the locking insert is conducted by the locking rod. For this, the locking rod comprises a locking head, which is insertable into the recess of the locking insert, and by activating or operating the locking head to press to opposed flanks of the recess in and outwards direction. For example, this may be conducted by rotating the locking head or by clamping it further into the interior of the recess.

The locking head and the recess are shaped to conform each other in the neutral state. Then, the locking head may be inserted through the radial cut-out into the recess when the locking insert is accessible from the radial cut-out. By activating the locking head, e.g. by rotating it, form fitting means of the locking head may engage form fitting means of the recess. Then, the locking head is held in place by the locking insert. The expanded locking insert also engages with the first grooves. Resultantly, the locking insert is prevented from moving along the tubular section in the axial direction.

As mentioned further below, in this state a slight angular movability of the locking rod is still possible, with the axial position being fixed. Due to the combination of first grooves and looking teeth, an axial position of the locking insert along the tubular section may simply be chosen and fixed. Thus, a simple tolerance compensation in an axial direction is possible.

The locking insert may comprise a separate first lateral part and a separate second lateral part, wherein the first and second lateral parts are combinable to form the locking insert, and wherein at least one of the first and second lateral parts comprises a recessed section on an inner side facing the respective other first or second lateral part to form the recess. Thus, the locking insert is divided into two parts, which may be arranged to be parallel to the axial direction of the tubular section any which may be moved away from each other to reach the expanded state. To receive the locking head, the recess is formed by at least one recessed section on an inner side of the respective lateral part that faces to the respective other lateral part. It is conceivable that the first and second lateral parts are designed to be mirror inverted, such that both parts comprise a recessed section that complete each other to form the recess.

The locking insert may be resilient to revert into the neutral state when not expanded by the locking head. If a correction of the position of the locking insert is required during its installation, the locking had may simply be deactivated to return the locking insert into the neutral state. Then, the engagement between the locking teeth and the first grooves is eliminated. The resiliency may for example be achieved by a suitable material selection of the locking insert, in particular when the locking insert is in one piece. If it is realized as two separate parts, a spring may be used.

The first and second lateral parts are coupled with at least one spring that is adapted to pull the lateral parts to each other. Thus, the at least one spring pulls both lateral path to each other to disengage the locking teeth. In a simple design, the at least one spring may be realized by two rubber bands arranged on both end faces of the locking insert. However, also metallic springs coupled with the lateral parts are conceivable.

The locking insert may comprise second grooves arranged at two opposed lateral inner surfaces of the recess, wherein the second grooves extend parallel to a face-to-face line of the locking insert, and wherein the locking head comprises locking grooves on two opposite sides that conform the second grooves. Thus, by simply rotating the locking head, the locking grooves engage with the second grooves. The locking head may be a flat component, that comprises the locking grooves on two opposite sides. It may be inserted into the recess with the two opposite sides assuming the axial direction. The recess may be dimensioned that the flat locking head fits into the recess in this orientation. By rotating the locking head about 90°, its wider dimension is pressed into the recess perpendicularly to the axial direction. Resultantly, the locking insert is expanded and the locking grooves engage the second grooves. However, the locking head may be inserted with a variable depth, i.e. with different insertion depths, wherein the respective insertion depth is locked by engaging the locking head with the recess. Thus, also a tolerance compensation in a direction perpendicular to the axial direction is provided.

The connecting device may further comprise a cage that encloses the locking insert, wherein the cage comprises a through-hole, and wherein the locking head is arranged inside the recess of the locking insert and the locking rod extends through the through-hole outside of the locking insert. The through-hole may be adapted to conform the cross-sectional surface of the locking rod. Thus, the locking rod to may be inserted into the locking insert and reaches through the through-hole to the outside. The axial position of the locking head relative to the locking insert is thus fixed. The cage allows to maintain a desired spatial relationship between the lateral parts of the locking insert if it is divided into two lateral parts.

The cage may comprise two opposite end plates, between which the locking insert is arranged. The cage is thus always moved together with the locking insert.

The cage may comprise a bridge part extending from one of the end plates to the other of the end plates, wherein the through-hole is arranged in the bridge part. Thus, the through-hole is in a fixed location of the locking insert, which allows to improve the expansion behavior.

The through-hole may comprise a circular shape having a diameter, which is smaller than the smallest dimension of the radial cutout. The locking rod, which protrudes through the through-hole, may thus be able to provide an angular movement about the axial direction of the tubular component.

The radial cutout may be an elongated hole. The locking insert may thus be placed into different axial positions, while the position variability is limited to a predetermined range. If in the unlikely case of a disengagement of the locking insert, the locking rod cannot move further than the radial cutout allows.

At least one of the locking insert and the tubular section may comprise at least one protrusion, and wherein the other one of the at least one of the locking insert and the tubular section may comprise at least one end stop, wherein the at least one protrusion and the at least one end stop are arranged parallel to the second grooves and are designed for allowing a rotary motion of the locking insert inside the tubular section with a rotatability of 1 to 10°, preferably 2 to 8° and most preferably 4 to 6°. The at least one protrusion and the at least one end stop allow to conduct a slight angular motion, which allows an expansion or compression of the second component attached to the connecting device. However, the degree of angular motion is clearly limited by the design of the at least one protrusion and the at least one end stop.

The first grooves may be arranged to extend in a circumferential direction. As mentioned above, this allows the locking insert to rotate about the axial direction even in the locked state.

The tubular section may be attachable to or integratable into a first component, wherein the locking rod may be attachable to or integratable into a second component, which is to be connected with the first component. The tubular section may be a part of an elongated, tubular component. However, it may also be connectable to a tubular or rod-shaped component. This may for example be a mounting rod inside a cabin of an aircraft. The locking rod in turn is connected to the second component, which may simply be a holder for a bus bar or another component, which may require to be rigidly fixed but also requires a slight position variability during use to prevent thermal stress.

The invention also relates to a vehicle, comprising an interior space, a first component and a second component arranged in the interior space, wherein the second component is coupled with the first component through at least one such connecting device. The first component may be a mounting rail attached to a structure of the vehicle. It may extend along a longitudinal axis in a constant installation height. The mounting rail may be hollow, such that locking inserts may be put into the interior space of the mounting rail at an end of the mounting rail any may be pushed or pulled to the desired mounting positions through a rod, a string, or a cord. When reaching the desired mounting positions, locking rods may be placed into the respective recesses of the locking inserts. As mentioned above, guiding means, such as the combination of protrusions and end stops, assist in guiding the locking inserts along the longitudinal axis, while maintaining a desired orientation of the locking inserts to enable positioning of the respective recesses underneath the respective radial cut-outs.

In an advantageous embodiment, the vehicle is an aircraft. In particular, the aircraft may be a commercial aircraft, but it may also be realized as a military or transportation aircraft.

### Brief description of the figures

In the following, the attached drawings are used to illustrate exemplary embodiments in more detail. The illustrations are schematic and not to scale. Identical reference numerals refer to identical or similar elements. They show:
- Fig. 1a to 2f:: a general design of the connecting device,
- Fig. 3 and 4: further details of the connecting device for providing an angular compensation motion.
- Fig. 5: a bus bar held on a structural part through connecting devices.
- Fig. 6: an aircraft.

### Detailed description of exemplary embodiments

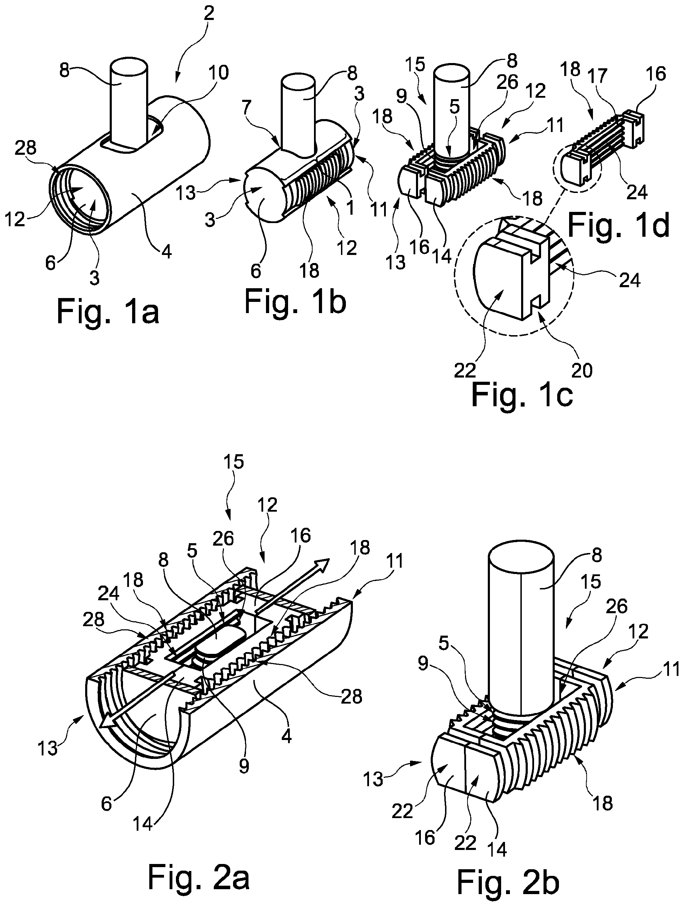

Figs. 1a to 1d show a connecting device 2 in various different illustrations. The connecting device 2 comprises a tubular section 4, a locking insert 12 and a locking rod 8. The tubular section 4 has a plurality of first grooves 28, which extend in a circumferential direction on an inner surface of the tubular section 4. The locking insert 12 is arranged inside the tubular section 4 underneath a radial cut-out 10 formed in the tubular section 4. The locking rod 8 is arranged inside the locking insert 12 and protrudes through the radial cut-out 10.

The locking insert 12 comprises a first lateral part 14 and a second lateral part 16. They are arranged parallel to each other in a mirror-inverted way. The locking insert 12 has a first lateral side 11, a second lateral side 13 and a connection side 15, which is arranged between the lateral sides 11 and 13. Along the two opposite lateral sides 11 and 13, several looking teeth 18 are provided. In the drawing plane they extend in a substantially vertical direction. In addition, the lateral parts 14 and 16 create a recess 26 open to the connection side 15 directly underneath the radial cut-out 10. The recess 26 is created by a recessed section 17 in each of the lateral parts 14 and 16, each facing the respective other lateral part 14 and 16. In the recess 26, a plurality of second grooves 24 are arranged at opposed sides. They extend along an axial direction of the locking insert and parallel to each other.

Furthermore, the lateral parts 14 and 16 are axially enclosed by a cage 6, which guides the lateral parts 14 and 16 to always maintain the same axial positions inside the tubular section 4, but allows a variable distance between the lateral parts 14 and 16. The cage 6 comprises two opposite end plates 3, between which a bridge part 1 is provided. Approximately in the center of the bridge part 1, a through-hole 7 is provided. The through-hole 7 has a diameter that conforms a diameter of the locking rod 8. It may be slightly smaller than the width of the radial cut-out 10 in a transverse direction of the axial extension of the tubular section 4.

The locking rod 8 comprises locking grooves 9 on two opposite sides, wherein the locking grooves 9 conform the shape of the second grooves 24. Here, the locking rod 8 is arranged inside the recess 26 of the locking insert 12 and protrudes out of the through-hole 7. The locking route 8 comprises a diameter that conforms the diamines of the through hole seven. It comprises a locking head 5, which is flattened on two opposite sides and which comprises a maximum width that does not exceed the diameter of the remaining part of the locking rod 8. Thus, it may be inserted through the through-hole 7 into the recess 26 and it may be removed from it again.

The lateral parts 14 and 16 may be moved away from each other, i.e. the locking insert 12 may be expanded, such that the locking teeth 18 reach the first grooves 28 and engage with them. The expansion may be conducted by inserting the locking head 5 into the recess 26 with the locking head 5 being oriented with the flattened sides facing the second grooves 24 of the recess 26. By rotating the locking head 5 about 90°, i.e. by rotation the locking rod 8 in general, the locking head 5 is urged between the lateral parts 14 and 16 with its larger dimension, such that the lateral parts 14 and 16 are pressed away from each other. In doing so, the locking grooves 9 of the locking head 5 engage with the second grooved 24 of the recess 26. Resultantly, the locking teeth 18 engage with the first grooves 28 to fix the axial position of the locking insert 12 and the locking grooves 9 engage with the second grooves 24 of the locking insert 12 to fix the insertion depth of the locking rod 8 into the locking insert 12.

The lateral parts 14 and 16 comprise end faces 22, which comprises at least partly circumferential spring grooves 20. Here, a spring device, a rubber band or similar device (not shown) may be attached that is capable of pulling the lateral parts 14 and 16 towards each other. Thus, when the locking rod 8 is rotated back into an initial position, the locking insert 12 reverts from an expanded state into a neutral state and the position of the locking insert 12 may be adapted again, if desired.

Fig. 2a shows the locking head 5 inserted into the recess 26. Here, the flattened sides face the second grooves 24 and the lateral parts 14 and 16 are flushly contacting each other. Hence, the locking teeth 18 and the first grooves 28 do not engage and the locking insert 12 can be moved in an axial direction, which is indicated by two arrows.

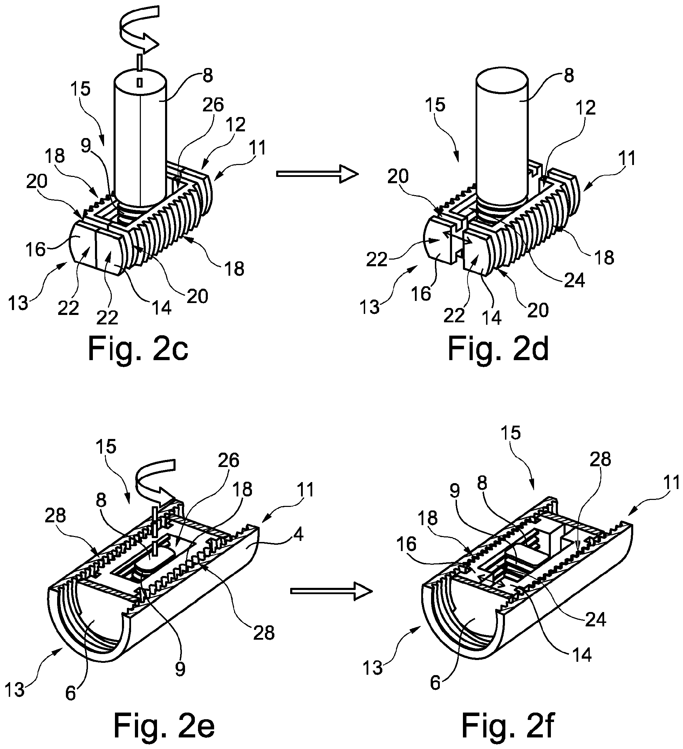

Fig. 2b shows a part of the locking insert 12 with the locking rod 8, i.e. the locking head 5, arranged between the lateral parts 14 and 16. In fig. 2c, the initiation of a rotation of the locking rod 8 is indicated. Here, the locking grooves 9 reach the second grooves 24. As shown in fig. 2d, the lateral parts 14 and 16 are moved away from each other to increase the distance between the opposite arrangements of locking teeth 18.

In fig. 2e, the neutral state of the locking insert 12 is illustrated, while fig. 2f shows the locking state.

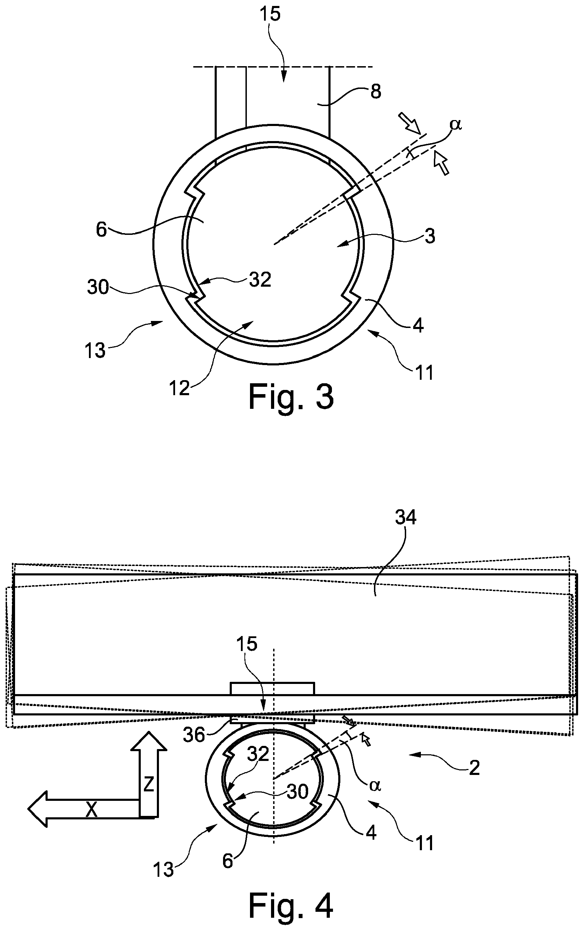

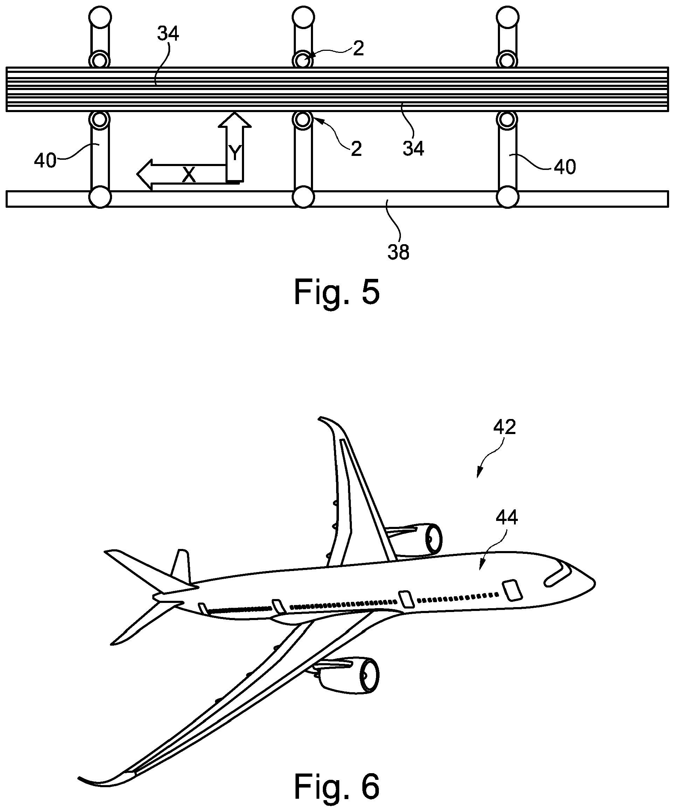

Fig. 3 shows the tubular section 4 with the locking insert 12 arranged inside in a front view. Here, the cage 6 comprises protrusions 30 and the tubular section 4 comprises correspondingly arranged end stops 32. The combination of protrusions 30 and end stops 32, which both extend in a radial direction, guides the locking insert 12 in an axial direction along the tubular section 4. However, a slight angular motion about an angle α is permitted. Thus, even when the locking rod 8 is rotated to expand the locking insert 12, a slight angular motion is still possible. This is exemplarily shown in fig. 4 with a bus bar 34 on a holder 36 attached to a connecting device 2. As shown in fig. 5, the bus bar 34 may be coupled with a structural part 38, such as a mounting rail, through a plurality of connecting devices 2, which are arranged on supporting arms 40. The tubular section 4 may exemplarily be a part of the supporting arm 40 as a first component. The holder 36 in turn is connected to the locking rod 8 as a second component.

Lastly, fig. 6 shows an aircraft 42 with an interior space 44, in which a component, such as a bus bar 34, is connected to a structural part of the aircraft 42 through at least one of the connecting devices 2.

### Reference numerals

- 1: bridge part
- 2: connecting device
- 3: end plate
- 4: tubular section
- 5: locking head
- 6: cage
- 7: through-hole
- 8: locking rod
- 9: locking grooves
- 10: radial cut-out / elongated hole
- 11: first lateral side
- 12: locking insert
- 13: second lateral side
- 14: first lateral part
- 15: connection side
- 16: second lateral part
- 17: recessed section
- 18: locking teeth
- 20: spring groove
- 22: end face
- 24: second groove
- 26: recess
- 28: first grooves
- 30: protrusion
- 32: end stop
- 34: bus bar
- 36: holder
- 38: structural part
- 40: supporting arm
- 42: aircraft
- 44: interior space

## Claims

1. Connecting device (2) for a variable-position transverse connection of two components, comprising:
a tubular section (4),
a locking insert (12), and
a locking rod (8),
wherein the tubular section (4) has a radial cutout (10) and a plurality of first grooves (28) on an inner tubular surface,
wherein the locking insert (12) comprises two opposed lateral sides (11, 13) and a connection side (15) arranged between the lateral sides (11, 13),
wherein the locking insert (12) is expandable from a neutral state into a locking state, wherein in the neutral state a distance between the two lateral sides (11, 13) is smaller than in the locking state,
wherein the locking insert (12) comprises locking teeth (18) on at least one of the lateral sides directly facing the inner tubular surface when inserted into the tubular section (4),
wherein the locking insert (12) is designed to be axially movable along the tubular section (4) in the neutral state and to engage the first grooves (28) in the locking state,
wherein the locking insert (12) comprises a recess (26) on the connection side (15) that is alignable with the radial cutout (10) when inserted into the tubular section (4),
wherein the locking rod (8) comprises a locking head (5) insertable into the recess (26) through the radial cutout (10) to selectively expand the locking insert (12) and to selectively provide a form-fit connection with the locking head (5).

2. Connecting device (2) of claim 1,
wherein the locking insert (12) comprises a separate first lateral part (14) and a separate second lateral part (16),
wherein the first and second lateral parts (14, 16) are combinable to form the locking insert (12), and
wherein at least one of the first and second lateral parts (14, 16) comprises a recessed section (17) on an inner side facing the respective other first or second lateral part (14, 16) to form the recess (26).

3. Connecting device (2) of claim 1 or 2,
wherein the locking insert (12) is resilient to revert into the neutral state when not expanded by the locking head (5).

4. Connecting device (2) of claim 2 and 3,
wherein the first and second lateral parts (14, 16) are coupled with at least one spring that is adapted to pull the lateral parts (14, 16) to each other.

5. Connecting device (2) of any of the preceding claims,
wherein the locking insert (12) comprises second grooves (24) arranged at two opposed lateral inner surfaces of the recess (26),
wherein the second grooves (24) extend parallel to a face-to-face line of the locking insert (12), and
wherein the locking head (5) comprises locking grooves (9) on two opposite sides that conform the second grooves (24).

6. Connecting device (2) of any of the preceding claims,
further comprising a cage (6) that encloses the locking insert (12),
wherein the cage (6) comprises a through-hole (7), and
wherein the locking head (5) is arranged inside the recess (26) of the locking insert (12) and the locking rod (8) extends through the through-hole (7) outside of the locking insert (12).

7. Connecting device (2) of claim 6,
wherein the cage (6) comprises two opposite end plates (3), between which the locking insert (12) is arranged.

8. Connecting device (2) of claim 7,
wherein the cage (6) comprises a bridge part (1) extending from one of the end plates (3) to the other of the end plates (3), and
wherein the through-hole (7) is arranged in the bridge part (1).

9. Connecting device (2) of any of the claims 6 to 8,
wherein the through-hole (7) comprises a circular shape having a diameter, which is smaller than the smallest dimension of the radial cutout (10).

10. Connecting device (2) of any of the preceding claims,
wherein the radial cutout (10) is an elongated hole.

11. Connecting device (2) of any of the preceding claims,
wherein at least one of the locking insert (12) and the tubular section (4) comprises at least one protrusion (30), and wherein the other one of the at least one of the locking insert (12) and the tubular section (4) comprises at least one end stop (32),
wherein the at least one protrusion (30) and the at least one end stop (32) are arranged parallel to the second grooves (24) and are designed for allowing a rotary motion of the locking insert (12) inside the tubular section (4) with a rotatability of 1 to 10°, preferably 2 to 8° and most preferably 4 to 6°.

12. Connecting device (2) of any of the preceding claims,
wherein the first grooves (28) are arranged to extend in a circumferential direction.

13. Connecting device (2) of any of the preceding claims,
wherein the tubular section (4) is attachable to or integratable into a first component (40), and
wherein the locking rod (8) is attachable to or integratable into a second component (36), which is to be connected with the first component (40).

14. Vehicle (42), comprising an interior space (44), a first component (40) and a second component (36) arranged in the interior space (44), wherein the second component (36) is coupled with the first component through at least one connecting device (2) of any of the preceding claims.

15. Vehicle (42) of claim 14, wherein the vehicle (42) is an aircraft (42).

## Patentansprüche

1. Verbindungsvorrichtung (2) für eine Querverbindung mit variabler Position von zwei Komponenten, umfassend:
einen rohrförmigen Abschnitt (4),
einen Verriegelungseinsatz (12) und
eine Verriegelungsstange (8),
wobei der rohrförmige Abschnitt (4) einen radialen Ausschnitt (10) und eine Vielzahl von ersten Nuten (28) an einer inneren rohrförmigen Fläche hat,
wobei der Verriegelungseinsatz (12) zwei gegenüberliegende laterale Seiten (11, 13) und eine zwischen den lateralen Seiten (11, 13) angeordnete Verbindungsseite (15) umfasst,
wobei der Verriegelungseinsatz (12) aus einem neutralen Zustand in einen Verriegelungszustand expandierbar ist,
wobei in dem neutralen Zustand ein Abstand zwischen den beiden lateralen Seiten (11, 13) kleiner als in dem Verriegelungszustand ist,
wobei der Verriegelungseinsatz (12) Verriegelungszähne (18) an mindestens einer der lateralen Seiten umfasst, die der inneren rohrförmigen Fläche direkt zugewandt sind, wenn er in den rohrförmigen Abschnitt (4) eingeführt ist,
wobei der Verriegelungseinsatz (12) dazu ausgelegt ist,
in dem neutralen Zustand axial entlang des rohrförmigen Abschnitts (4) beweglich zu sein und die ersten Nuten (28) in dem Verriegelungszustand in Eingriff zu nehmen, wobei der Verriegelungseinsatz (12) eine Aussparung (26) an der Verbindungsseite (15) umfasst, die auf den radialen Ausschnitt (10) ausrichtbar ist, wenn er in den rohrförmigen Abschnitt (4) eingeführt ist,
wobei die Verriegelungsstange (8) einen Verriegelungskopf (5) umfasst, der durch den radialen Ausschnitt (10) in die Aussparung (26) einführbar ist, um den Verriegelungseinsatz (12) gezielt zu expandieren und gezielt eine Formschlussverbindung mit dem Verriegelungskopf (5) bereitzustellen.

2. Verbindungsvorrichtung (2) nach Anspruch 1,
wobei der Verriegelungseinsatz (12) einen separaten ersten lateralen Teil (14) und einen separaten zweiten lateralen Teil (16) umfasst,
wobei der erste und der zweite laterale Teil (14, 16) zum Bilden des Verriegelungseinsatzes (12) kombinierbar sind und
wobei der erste und/oder der zweite laterale Teil (14, 16) einen ausgesparten Abschnitt (17) an einer inneren Seite umfassen, der dem jeweils anderen ersten oder zweiten lateralen Teil (14, 16) zum Bilden der Aussparung (26) zugewandt ist.

3. Verbindungsvorrichtung (2) nach Anspruch 1 oder 2, wobei der Verriegelungseinsatz (12) federnd ist, um in den neutralen Zustand zurückzukehren, wenn er nicht von dem Verriegelungskopf (5) expandiert wird.

4. Verbindungsvorrichtung (2) nach Anspruch 2 und 3, wobei der erste und der zweite laterale Teil (14, 16) mit mindestens einer Feder gekoppelt sind, die dazu ausgeführt ist, die lateralen Teile (14, 16) zusammenzuziehen.

5. Verbindungsvorrichtung (2) nach einem der vorhergehenden Ansprüche,
wobei der Verriegelungseinsatz (12) zweite Nuten (24) umfasst, die an zwei gegenüberliegenden lateralen Innenflächen der Aussparung (26) angeordnet sind,
wobei sich die zweiten Nuten (24) parallel zu einer Front-zu-Front-Linie des Verriegelungseinsatzes (12) erstrecken, und
wobei der Verriegelungskopf (5) Verriegelungsnuten (9) an zwei gegenüberliegenden Seiten umfasst, die zu den zweiten Nuten (24) passen.

6. Verbindungsvorrichtung (2) nach einem der vorhergehenden Ansprüche,
ferner umfassend einen Käfig (6), der den Verriegelungseinsatz (12) umschließt,
wobei der Käfig (6) ein Durchgangsloch (7) umfasst und
wobei der Verriegelungskopf (5) in der Aussparung (26) des Verriegelungseinsatzes (12) angeordnet ist und sich die Verriegelungsstange (8) durch das Durchgangsloch (7) außerhalb des Verriegelungseinsatzes (12) erstreckt.

7. Verbindungsvorrichtung (2) nach Anspruch 6,
wobei der Käfig (6) zwei gegenüberliegende Endplatten (3) umfasst, zwischen denen der Verriegelungseinsatz (12) angeordnet ist.

8. Verbindungsvorrichtung (2) nach Anspruch 7,
wobei der Käfig (6) einen Brückenteil (1) umfasst, der sich von einer der Endplatten (3) zu der anderen der Endplatten (3) erstreckt, und
wobei das Durchgangsloch (7) in dem Brückenteil (1) angeordnet ist.

9. Verbindungsvorrichtung (2) nach einem der Ansprüche 6 bis 8,
wobei das Durchgangsloch (7) eine Kreisform mit einem Durchmesser umfasst, der kleiner als die kleinste Abmessung des radialen Ausschnitts (10) ist.

10. Verbindungsvorrichtung (2) nach einem der vorhergehenden Ansprüche,
wobei der radiale Ausschnitt (10) ein längliches Loch ist.

11. Verbindungsvorrichtung (2) nach einem der vorhergehenden Ansprüche,
wobei der Verriegelungseinsatz (12) und/oder der rohrförmige Abschnitt (4) mindestens einen Vorsprung (30) umfassen und wobei der jeweils andere des Verriegelungseinsatzes (12) und des rohrförmigen Abschnitts (4) mindestens einen Endanschlag (32) umfasst, wobei der mindestens eine Vorsprung (30) und der mindestens eine Endanschlag (32) parallel zu den zweiten Nuten (24) angeordnet und dazu ausgelegt sind, eine Drehbewegung des Verriegelungseinsatzes (12) in dem rohrförmigen Abschnitt (4) mit einer Drehbarkeit von 1 bis 10°, vorzugsweise 2 bis 8° und am bevorzugtesten 4 bis 6° zu gestatten.

12. Verbindungsvorrichtung (2) nach einem der vorhergehenden Ansprüche,
wobei die ersten Nuten (28) so angeordnet sind, dass sie sich in einer Umfangsrichtung erstrecken.

13. Verbindungsvorrichtung (2) nach einem der vorhergehenden Ansprüche,
wobei der rohrförmige Abschnitt (4) an einer ersten Komponente (40) anbringbar oder darin integrierbar ist und
wobei die Verriegelungsstange (8) an einer zweiten Komponente (36), die mit der ersten Komponente (40) zu verbinden ist, anbringbar oder darin integrierbar ist.

14. Fahrzeug (42), umfassend einen Innenraum (44), eine erste Komponente (40) und eine zweite Komponente (36), die in dem Innenraum (44) angeordnet sind, wobei die zweite Komponente (36) durch mindestens eine Verbindungsvorrichtung (2) nach einem der vorhergehenden Ansprüche mit der ersten Komponente gekoppelt ist.

15. Fahrzeug (42) gemäß Anspruch 14, wobei das Fahrzeug (42) ein Flugzeug (42) ist.

## Revendications

1. Dispositif de raccordement (2) pour un raccordement transversal à position variable de deux composants, comprenant :
une section tubulaire (4),
un insert de verrouillage (12), et
une tige de verrouillage (8),
la section tubulaire (4) ayant une découpe radiale (10) et une pluralité de premières rainures (28) sur une surface tubulaire interne,
l'insert de verrouillage (12) comprenant deux côtés latéraux (11, 13) opposés et un côté de raccordement (15) disposé entre les côtés latéraux (11, 13),
l'insert de verrouillage (12) pouvant être élargi d'un état neutre à un état de verrouillage, dans l'état neutre, une distance entre les deux côtés latéraux (11, 13) étant inférieure à celle dans l'état de verrouillage, l'insert de verrouillage (12) comprenant des dents de verrouillage (18) sur au moins l'un des côtés latéraux directement en regard de la surface tubulaire interne lorsqu'il est inséré dans la section tubulaire (4),
l'insert de verrouillage (12) étant conçu pour être déplaçable axialement le long de la section tubulaire (4) dans l'état neutre et pour entrer en prise avec les premières rainures (28) dans l'état de verrouillage,
l'insert de verrouillage (12) comprenant un renfoncement (26) sur le côté de raccordement (15) qui peut être aligné avec la découpe radiale (10) lors de son insertion dans la section tubulaire (4),
la tige de verrouillage (8) comprenant une tête de verrouillage (5) pouvant être insérée dans le renfoncement (26) à travers la découpe radiale (10) pour élargir sélectivement l'insert de verrouillage (12) et pour assurer sélectivement une liaison par complémentarité de forme avec la tête de verrouillage (5) .

2. Dispositif de raccordement (2) selon la revendication 1,
l'insert de verrouillage (12) comprenant une première partie latérale (14) séparée et une deuxième partie latérale (16) séparée,
les première et deuxième parties latérales (14, 16) pouvant être combinées pour former l'insert de verrouillage (12), et
au moins l'une des première et deuxième parties latérales (14, 16) comprenant une section en retrait (17) sur un côté interne en regard de l'autre première ou deuxième partie latérale (14, 16) respective pour former le renfoncement (26).

3. Dispositif de raccordement (2) selon la revendication 1 ou 2,
l'insert de verrouillage (12) étant élastique pour revenir dans l'état neutre lorsqu'il n'est pas élargi par la tête de verrouillage (5).

4. Dispositif de raccordement (2) selon les revendications 2 et 3,
les première et deuxième parties latérales (14, 16) étant accouplées à au moins un ressort qui est prévu pour tirer les parties latérales (14, 16) l'une vers l'autre.

5. Dispositif de raccordement (2) selon l'une quelconque des revendications précédentes,
l'insert de verrouillage (12) comprenant des deuxièmes rainures (24) disposées au niveau de deux surfaces internes latérales opposées du renfoncement (26),
les deuxièmes rainures (24) s'étendant parallèlement à une ligne face à face de l'insert de verrouillage (12), et
la tête de verrouillage (5) comprenant des rainures de verrouillage (9) sur deux côtés opposés qui épousent les deuxièmes rainures (24).

6. Dispositif de raccordement (2) selon l'une quelconque des revendications précédentes,
comprenant en outre une cage (6) qui enferme l'insert de verrouillage (12),
la cage (6) comprenant un trou traversant (7), et
la tête de verrouillage (5) étant disposée à l'intérieur du renfoncement (26) de l'insert de verrouillage (12) et la tige de verrouillage (8) s'étendant à travers le trou traversant (7) à l'extérieur de l'insert de verrouillage (12) .

7. Dispositif de raccordement (2) selon la revendication 6,
la cage (6) comprenant deux plaques d'extrémité opposées (3), entre lesquelles l'insert de verrouillage (12) est disposé.

8. Dispositif de raccordement (2) selon la revendication 7,
la cage (6) comprenant une partie formant pont (1) s'étendant de l'une des plaques d'extrémité (3) à l'autre des plaques extrémité (3), et
le trou traversant (7) étant disposé dans la partie formant pont (1).

9. Dispositif de raccordement (2) selon l'une quelconque des revendications 6 à 8,
le trou traversant (7) comprenant une forme circulaire ayant un diamètre, qui est inférieur à la dimension la plus petite de la découpe radiale (10).

10. Dispositif de raccordement (2) selon l'une quelconque des revendications précédentes,
la découpe radiale (10) étant un trou allongé.

11. Dispositif de raccordement (2) selon l'une quelconque des revendications précédentes,
au moins l'un parmi l'insert de verrouillage (12) et la section tubulaire (4) comprenant au moins une saillie (30), et l'autre parmi l'au moins un parmi l'insert de verrouillage (12) et la section tubulaire (4) comprenant au moins une butée d'extrémité (32),
l'au moins une saillie (30) et l'au moins une butée d'extrémité (32) étant disposées parallèlement aux deuxièmes rainures (24) et étant conçues pour permettre un mouvement de rotation de l'insert de verrouillage (12) à l'intérieur de la section tubulaire (4) avec une capacité de rotation de 1 à 10°, de préférence 2 à 8° et le plus préférablement 4 à 6°.

12. Dispositif de raccordement (2) selon l'une quelconque des revendications précédentes,
les premières rainures (28) étant prévues pour s'étendre dans une direction circonférentielle.

13. Dispositif de raccordement (2) selon l'une quelconque des revendications précédentes,
la section tubulaire (4) pouvant être attachée à ou pouvant être intégrée dans un premier composant (40), et la tige de verrouillage (8) pouvant être attachée à ou pouvant être intégrée dans un deuxième composant (36), lequel doit être raccordé au premier composant (40).

14. Véhicule (42), comprenant un espace intérieur (44), un premier composant (40) et un deuxième composant (36) disposés dans l'espace intérieur (44), le deuxième composant (36) étant accouplé au premier composant par le biais d'au moins un dispositif de raccordement (2) selon l'une quelconque des revendications précédentes.

15. Véhicule (42) selon la revendication 14, le véhicule (42) étant un aéronef (42).
